# EUROPEAN PATENT SPECIFICATION

(11) **EP 4 545 302 B1**
(45) Date of publication and mention of the grant of the patent: **12.08.2026**
(21) Application number: 24206515.9
(22) Date of filing: 14.10.2024
(51) Int. Cl.: B33Y 80/00, F24F 1/0067, F24F 5/00, F28F 13/08, F24F 1/0097, F24F 1/0063, F28F 13/00

(54) **ROOM AIR CONDITIONER WITH A THERMOELECTRIC HEAT PUMP**
RAUMKLIMAANLAGE MIT THERMOELEKTRISCHER WÄRMEPUMPE
CLIMATISEUR D'ESPACE AVEC POMPE À CHALEUR THERMOÉLECTRIQUE

(30) Priority: 25.10.2023 EP 23205941; 07.12.2023 EP 23214891
(43) Date of publication of application: 30.04.2025
(73) Proprietor: Siemens Schweiz AG, 8047 Zürich (CH)
(72) Inventor: Kiy, Michael, 6331 Hünenberg (CH); Kiener, Christoph, 81369 München (DE); Montalvo Beltran, Diego Alejandro, 10559 Berlin (DE)
(74) Representative: Siemens Patent Attorneys

(56) References cited:
- WO-A1-2018/077321
- WO-A1-2021/257464
- CN-U- 205 448 237
- US-A1- 2013 319 014

## Description

The invention concerns a room air conditioner.

WO2018/077321 describes structures for influencing the temperature of a solid object, for example a vehicle battery, a fluid container or a microprocessor. Some structures comprise a thermoelectric heat pump that is thermally connected to the solid object at one of the two contact plates of the thermoelectric heat pump, which plate therefore outputs heat or chill. On its opposite side, at the input plate, the thermoelectric heat pump is thermally connected to a heat exchanger with air flow paths therethrough. The heat exchanger disperses waste chill or waste heat in the surrounding air, based on the needs of the object, not on the needs of, say, room air conditioning. If closed loop control would be added, a sensor would sense the object temperature and not a measurand for a room air cooling demand or a room air heating demand, such as room air temperature, outside temperature, daylighting, dew point, volatile organic components or occupancy.

Likewise, initial figures in WO2018/077321 show a thermoelectric heat pump and a porous heat exchanger with straight passages in various directions therethrough on top. The straight passages cover more than half of the respective frontal area. It is uncertain from where one would expect air to flow towards the heat exchanger in operation as intended, which depends on the shape and temperature of the solid object and other objects nearby, on the orientation of the structure and on the presence of a fan.

The same holds true for figures in WO2018/077321 that show a cooling pipe above a heat exchanger on top of a thermoelectric heat pump. Moreover, if one assumes this orientation of the structure and given that the structure only makes sense for cooling the thermally connected object, the cooling pipe slows down or even sends down rising hot air within the heat exchanger, making the air flow towards the heat exchanger chaotic, slow and instable. A heat exchanger that by design is not regularly exposed to a main air flow in operation as intended, is not configured to exchange heat. Some structures as depicted in WO2018/077321 are irregularly printed heat exchangers that do without a thermoelectric heat pump. Their chaotic air flow paths appear to include large straight passages, but a frontal area estimation is impossible for lack of detail and a distinguishable background. Anyhow, the main air flow, if any, may not be aligned with the angle of view.

The inventive device is a room air conditioner comprising at least one thermoelectric heat pump that comprises an output plate and an input plate, as well as at least one indoor heat exchanger that is thermally connected to the output plate and that is configured in operation as intended to exchange heat with indoor air.

Suitable thermoelectric heat pumps of various design can be obtained commercially. Examples of their construction are described in US2005/0016575A1 for instance.

Such room air controllers are described in US2013/0319014A1. Every indoor heat exchanger consists of fins on the output plates of the thermoelectric heat pumps. The fins are specified as pieces of sheet metal, ribs, fingers et cetera. They are shown in the figures to be freestanding within an air channel, therefore not constituting walls around paths for the air to flow through the indoor heat exchanger. In particular, air flow paths at an angle to the main air flow towards the indoor heat exchanger in operation as intended are absent.

The indoor heat exchanger of the room air conditioner according to the invention features air flow paths therethrough.

A room air conditioner with a thermoelectric heat pump that pumps heat between the flat plates on either side is described in US2017/0363307A1. In operation as intended, a centrally mounted fan pulls air from the room and pushes it out radially towards an indoor heat exchanger. The latter consists of flat metal plates that are arranged side-by-side in a semi-circle around the fan, at their sides in contact with the housing of the room air conditioner, as well as perpendicular thermosiphons that hold the metal plates together and that also provide the thermal connection to the output plate of the thermoelectric heat pump. Between the metal plates and the thermosiphons, straight passages are lined up with the main air flow towards them. They account for more than half of the frontal area of the indoor heat exchanger, which indicates low air flow resistance. Along the flow path of the air therethrough, each curved thermosiphon first protrudes and then recedes transversally, changing the air flow path cross sectional area locally. The thermosiphons between a neighbouring pair of metal plates in line with that main air flow also constitute air flow path walls of an interconnected side channel. The air leaves the indoor heat exchanger downwards back into the room, therefore as indoor air, for cooling the lower part thereof. Other air from the room is forced upwards through a second heat exchanger that is connected thermally to the other plate of the thermoelectric heat pump, thus heating the higher part of the room.

The room air conditioner according to the invention also comprises at least one outdoor heat exchanger that is thermally connected to the input plate of the thermoelectric heat pump and that is configured in operation as intended to exchange heat with an outdoor environment.

Such a room air conditioner is indicated in patent application KR2012035308A. By means of an indoor heat exchanger that extends into an entry air channel, a thermoelectric heat pump can remove heat from or add heat to air from outside. A motorised fan draws the fresh indoor air into the room. The indoor heat exchanger is said to be a heat sink block and appears to be a structure of aligned metal plates that form straight passages in line with the main air flow towards them. Their dominant frontal straight passage area and the smooth plate surfaces without transversal protrusions or recessions suggest that they surround air flow paths of highly laminar air flow with minimal air resistance. A similar outdoor heat exchanger on the other side of the thermoelectric heat pump is located indoors but extends into an exit air channel, through which air from the room is blown outdoors, thus disposing of heat in air on its way to an outdoor environment, respectively collecting heat therefrom.

For application in buildings, ships, cars and the like, with requirements such as reliably avoiding condensation, thermoelectric cooling is known to be less efficient and less effective and more expensive than cooling with vapor-compression refrigeration. Thermoelectric heating suffers from similar disadvantages. This has prevented their broad use despite some obvious advantages, such as decentral installation, retrofit installation, compactness and low maintenance. The object of the invention is to provide room air conditioners with thermoelectric cooling or heating that better suit the application.

According to the invention, in a simply connected region on the indoor heat exchanger, straight passages through the indoor heat exchanger in line with the main air flow towards them in operation as intended are absent or contribute less than 44% to the frontal area of the region, the corresponding part of the indoor heat exchanger extends to where it is thermally connected to the output plate, and the frontal area of the region is at least half the frontal area of the indoor heat exchanger. Preferably, with a good choice of structure and material for the indoor heat exchanger, such straight passages in the region are absent or contribute less than 36% to the frontal area of the region.

In operation, air does flow towards a heat exchanger predominantly in main directions before it may be diverted on a local scale by flowing around the leading edges of the indoor heat exchanger material itself. If the room air conditioner comprises a motorised ventilator, the effect of an initial rotational component of the airspeed often can be neglected, or else sufficiently well estimated. The same holds true for the effect of standing sound waves inside an air channel. Alternatively, without a ventilator or slanted walls nearby, the main air flow direction towards the indoor heat exchanger is along the vertical, because the air density changes when the air is cooled or heated therein. An occasional interference by other air flow in the room may lead to a temporary reduction of effect or of efficiency but can be ignored for the purpose of the invention.

The invention is based on the insight that disturbing the air flow on entry into or within the indoor heat exchanger of a room air conditioner by reducing the frontal area of the straight passages therethrough disproportionately improves the exchange of heat therewith, generally improving the conductivity of heat within the indoor heat exchanger too, while the air flow through the indoor heat exchanger can be kept at acceptable levels. This allows meeting the commercial requirements for broader application of the room air conditioner, including practical upper limits on production costs and size. Instead of the whole indoor heat exchanger, a simply connected region thereon suffices, if large enough and if the corresponding part of the indoor heat exchanger, that is its part behind the region in the main direction of the incoming air flow, extends to where it is thermally connected to the output plate of the thermoelectric heat pump. One could put indoor heat exchanger parts with wider or more densely placed straight passages in line with the incoming air flow next to the region, provided that they do not hinder the heat being conducted within the heat exchanger to where is thermally connected to the output plate, for example at an edge of the indoor heat exchanger. These extra indoor heat exchanger parts may raise the average frontal area contribution by straight air flow passages substantially, the major restriction being the size of the room air conditioner, while the indoor heat exchanger in the aforesaid region still brings benefits of the invention.

According to the invention, there are air flow paths through the indoor heat exchanger that do not include such a straight passage.

The other air flow paths preferably run through the corresponding part of the indoor heat exchanger.

Along most air flow paths through the indoor heat exchanger, preferably through the corresponding part of the indoor heat exchanger, the path wall advantageously changes the air flow path cross sectional area locally by more than 2% of the previous air flow path cross sectional area at least 20 times by protruding or receding transversally, preferably at least somewhere protruding or receding by at least 80 micrometres. Openings for air in between protruding path walls have a typical diameter of 4mm at most. Advantageously, the surface of the indoor heat exchanger, preferably of the corresponding part thereof, is uneven over at least 40% of its area. An uneven surface is not flat but curved or, down to the scale of at least 80 micrometres, rough, or something in between. The air flow resistance is hardly affected thereby.

Advantageously, in operation as intended the cross-sectional area of the indoor heat exchanger in line with the main air flow towards its leading edges that are at a shared distance to where the indoor heat exchanger is thermally connected to the output plate of the thermoelectric heat pump, gradually decreases with greater distance, preferably such that the inner temperature gradient size is similar everywhere to within half its average value in dynamic equilibrium. Leading edges of the indoor heat exchanger are at a shared distance if each has the same minimal distance to every point where the indoor heat exchanger is thermally connected to the output plate. Some fluctuation of the cross-sectional area may occur, for instance when in a periodic indoor heat exchanger structure an almost parallel elongate part is quickly intersected. Even so, the inner temperature gradient of the indoor heat exchanger can be made low and stable in operation as intended. The indoor heat exchanger therefore can have a larger size without unacceptable loss of effectivity at its far end or condensation where it touches the output plate or loss of efficiency from creating too large a temperature difference between the thermoelectric heat pump plates.

In one implementation, the ratio of the average cross-sectional area of the indoor heat exchanger to the average cross-sectional area in between its material decreases if the distance increases from where the indoor heat exchanger is thermally connected to the output plate. This can be achieved by giving the indoor heat exchanger fewer material parts per unit volume or by giving it thinner material parts per unit volume. Advantageously however, the shape of the indoor heat exchanger tapers away from where it is thermally connected to the output plate of the thermoelectric heat pump. Then the envelope of such cross sections closes in on itself with increasing distance, which has a similar effect even if the content of the indoor heat exchanger is homogenous. Its shape preferably tapers away essentially horizontally in operation as intended. The flat thermoelectric heat pump is best positioned parallel to the outer wall of the room in which the room air conditioner is installed, and the indoor heat exchanger is held directly against it. Then, the indoor heat exchanger from the side resembles for instance a pointed capital letter "L". If the output plate of the thermoelectric heat pump in operation extends horizontally, the indoor heat exchanger might resemble a discus that overhangs the thermoelectric heat pump.

Techniques in powder metallurgy and additive manufacturing allow accurate and cost-effective production of such indoor heat exchangers. They may contain of a metal or an alloy, preferably an alloy with a high content of aluminium. They may be shaped as a network of interconnected strips, say, a tree network or a mesh network such as a porous metal foam, or rather as a folded sheet structure, in particular with a near minimal surface. They may be quasi-chaotic or periodical. They can be made sufficiently hollow for the air to flow through. They can be made appropriately shaped for the heat to be exchanged with the air. They can be made sufficiently solid for the heat to be conducted therein. Less accurate techniques can be used too for producing the indoor heat exchangers for a room air conditioner according to the invention, such as sintering pre-shaped pieces of a thermally conductive ceramic, most likely aluminium nitride composites, or pieces of an alloy.

The indoor heat exchanger advantageously comprises a heat isolating surface cover at least adjacent to where it is thermally connected to the output plate of the thermoelectric heat pump. Preferably, any heat conduit between the indoor heat exchanger and the output plate of the thermoelectric heat pump comprises the cover too, as well as the output plate itself where it is not in contact with either. The heat isolating surface cover might contain one or several polymer materials.

Advantageously, the room air conditioner comprises at least one indoor heat exchanger holder that is configured reversibly to hold the indoor heat exchanger, preferably against the output plate of the thermoelectric heat pump. An indoor heat exchanger holder might be a clamp made of wires that encompass the indoor heat exchanger, or else one of several flange button head screws and material having threaded holes with which it can interact. These measures allow easy removal of the indoor heat exchanger for cleaning or replacement. Preferably, the room air conditioner also comprises an actuator that is configured to move the indoor heat exchanger holder, so as to increase the exchange of heat with the indoor air. Preferably, the room air conditioner is configured to expose air from within the room to the indoor heat exchanger, rather than for instance enclosing the indoor heat exchanger in an entry air channel and in operation drawing only air from outside indoors.

Thermally connected at the other side of the thermoelectric heat pump, the outdoor heat exchanger typically can be made larger than the indoor heat exchanger. Typically, it can be put out of sight, if appropriate by connecting it to the input plate via a heat conduit, preferably a passive heat conduit such as a thermosiphon or heat pipe. Outdoors it can be ventilated with less consideration of noise. Still, especially if the outdoor heat exchanger is configured to transfer heat to or from air, it preferably comprises a structure as described herein for indoor heat exchangers. Alternatively, it may be a liquid flow channel in close contact with or even complemented by at least a part of the input plate. While such an outdoor heat exchanger may be located indoors, the flow disposes of heat or chill in an outdoor environment. For instance, a metal box against the input plate, preferably with heat conducting paste in between, comprises a connector for a pipe that fills it with cold water and a connector for a pipe that leads the heated water to a drain outdoors.

The aforesaid structural measures deal with the problem of comparatively small room air conditioners with thermoelectric heat pumps, yielding an increase in performance and economy while still minimising condensation while cooling, odour while heating and unsuitable maintenance efforts.

According to the invention, the room air conditioner comprises at least one sensor that is configured to sense a measurand for the cooling demand, as well as a controller that is configured to generate output based on the sensor output and based on at least one setpoint, and that is configured to set the performance of the thermoelectric heat pump in accordance with its output.

Examples of a measurand are a change of passive infrared radiation by human movement in the room, the lighting level in a windowless room or something else that indicates occupancy. Preferably, a measurand indicates air temperature, for instance by means of a temperature sensitive resistor, an electromagnetic radiation sensitive semiconductor junction or an acoustic wave sensitive piezoelectric substrate. Heating or cooling is often triggered by a sensor of the air temperature outside the building. More preferably however, alternatively or at best additionally, a measurand indicates the temperature of air inside the room. Ideally, the room air conditioner also comprises a sensor of inside air humidity, say, a dew point sensor. Air humidity by itself is not a measurand for a cooling or heating demand, but it is if combined with the room air temperature.

The sensor and the controller might be integrated into the main body of the room air conditioner, but a part of either might be remote. If so, that sensor or controller includes a module in the main body of the room air conditioner that is configured to receive data and to act in accordance therewith. For example, a control software runs on a dedicated server or on a cloud server. Then, the controller includes a module in the main body of the room air conditioner that is configured to receive control data and accordingly to set the performance of the thermoelectric heat pump. Also, the controller might perform a short-term control locally and a remote analysis for optimising the short-term control, especially to deduct whether relevant circumstances of operation have changed or to adapt control if it knows that they have. Preferably, the controller is configured to determine a need or to receive a request for user feedback and is configured to enquire feedback from a user. It preferably is configured to register an electronic device of the user and is configured to enquire feedback by means of the device, for instance by presenting a questionnaire or by using a large language model.

The controller sets the performance of the thermoelectric heat pump for instance by determining its electrical power intake. It might closed-loop-regulate the thermoelectric heat pump in any way, for instance in the two-point way by switching the thermoelectric heat pump on and off, or for instance in continuous or near-continuous modulation in response to the proportional, the integral or the derivative of the difference between a processed sensor output and the setpoint. Advantageously however, the controller is configured at times to amend its output as compared to mere regulation for restricting the temperature difference between the output plate and the input plate of the thermoelectric heat pump, in particular with the intention to restrict the difference to a maximum that is below 35°C, for staying in the most efficient performance range of the thermoelectric heat pump.

Likewise, the controller advantageously is configured at times to amend its output as compared to mere regulation for restricting condensation at the output plate of the thermoelectric heat pump or condensation on the indoor heat exchanger. Advantageously, it is configured to calculate the performance of the thermoelectric heat pump at which condensation occurs. This calculation might require an extra humidity sensor or dew point sensor, the frequent reception of weather data or an initial thermodynamic modelling specific to the room. In this way, the indoor heat exchanger can approach the dew point temperature closely without unacceptably crossing it. Advantageously, the controller in particular is configured at times not to make the thermoelectric heat pump cool the output plate even though the sensor output and the setpoint would require doing so. Advantageously, the controller even is configured at times to amend its output for heating the output plate temporarily above a minimum that is above 60°C. For the sake of disinfection of the indoor heat exchanger, the output plate average temperature preferably is held above 70°C for some time, say, for 30s, thus keeping maintenance rare.

These control measures for a thermoelectric room air conditioner with an indoor heat exchanger that has few or no straight passages therethrough in line with the main incoming air flow require some calculation effort but allow optimisation of performance and economy or reduction of maintenance, while still preventing condensation and odour.

The invention is illustrated in the drawings as follows.
Figure 1 shows a sketch of the main body of a room air conditioner according to the invention.
Figure 2 shows a schema in sideways view of components in a part of the main body of the same room air conditioner.
Figure 3 shows a sketch of a rectangular cut-out of the indoor heat exchanger of the same or a different room air conditioner.
Figure 4 shows a sketch of a rectangular cut-out of a variant indoor heat exchanger for a similar room air conditioner according to the invention close to where it is thermally connected.
Figure 5 shows a sketch of a rectangular cut-out of the same variant indoor heat exchanger far from where it is thermally connected.

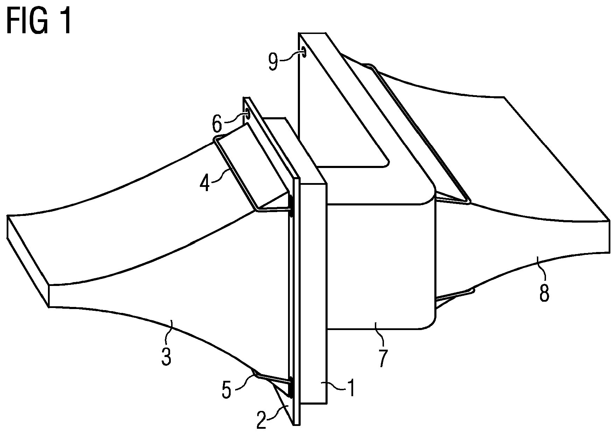

In figure 1, the main body of an air conditioner for a room for human occupation according to the invention contains a housing 1. It is meant to be mounted into an opening in the panelling to the left of a room window or into an opening of an air disposal duct or into an opening in an outer wall, for the main purpose of cooling at best high up in the room. An upright cover plate 2 measuring 22cm by 22cm should seal off the opening.

The indoor heat exchanger 3, which lacks structural detail here, is intended to be placed inside the room. No fixed objects obstruct the free flow of air in the room towards or away from it. It is held against the flat output plates of thermoelectric heat pumps that are mounted flush within a large gap in cover plate 2, none of which are shown here. Preferably, a thermal paste surrounds the material of the indoor heat exchanger 3 where it touches the output plates of the thermoelectric heat pumps. The clamps that hold the indoor heat exchanger 3 consist of thin rods 4, 5 and spring-loaded hinges for them, which are hidden within housing 1.

The indoor heat exchanger 3 on one side borders the output plates and on the other side tapers horizontally away from them. In operation, the beak-like protrusion can capture a larger vertical flow of air, as large as is practical thanks to an optimisation of its shape. For esthetical reasons and assuming some free space on either side of the room air conditioner main body, the horizontal tapered beak of the indoor heat exchanger alternatively could be rounded around the vertical such that it resembles a semi-circle disk.

When the room air conditioner cools the air that approaches from above, the leading edges of the indoor heat exchanger 3 on top that share a distance to the output plates of the thermoelectric heat pumps, build an almost straight surface line in parallel to rod 4. The area of the vertical cross-section along this line decreases with every increase of their shared distance away from the output plates. The decrease is chosen just so that in dynamic equilibrium, given the content of the indoor heat exchanger 3, the size in operation of the inner temperature gradient over the width of the indoor heat exchanger 3 is small, assuming that the approaching air has a homogenous temperature. A small linear change of the temperature everywhere within the indoor heat exchanger 3 allows its large horizontal extension without an unacceptable loss of efficiency by overexerting the thermoelectric heat pumps, or an unacceptable condensation where their output plates touch the indoor heat exchanger 3 or an unacceptable loss of effectivity at the far end of the taper.

A sensor suite 6 inside and behind cover plate 2 senses both temperature and humidity locally, close to the cooling plate of the thermoelectric heat pump yet upstream during a cooling operation. Thus, the place is well suited for dew point measurements and very well suited for indoor air temperature measurements during cooling. Sensor suite 6 also comprises a temperature sensor that can measure a temperature at a distance as an indication of the general air temperature in the room.

Meant to be placed outside the room, the outdoor heat exchanger is thermally connected to the input plate at the backside of the thermoelectric heat pump by heat pipes within an arm 7. The outdoor heat exchanger 8 is larger than the indoor heat exchanger 3. It is positioned away from any window next to which the room air conditioner main body has been installed, further to the left thereof, so as less to obstruct the view from inside the room.

At the back of heat pipes arm 7, on the shady side thereof and away from the heated air stream that rises from the outdoor heat exchanger 8 if the room air conditioner is cooling the room, an air temperature sensor 9 is mounted for measuring the air temperature outside the room.

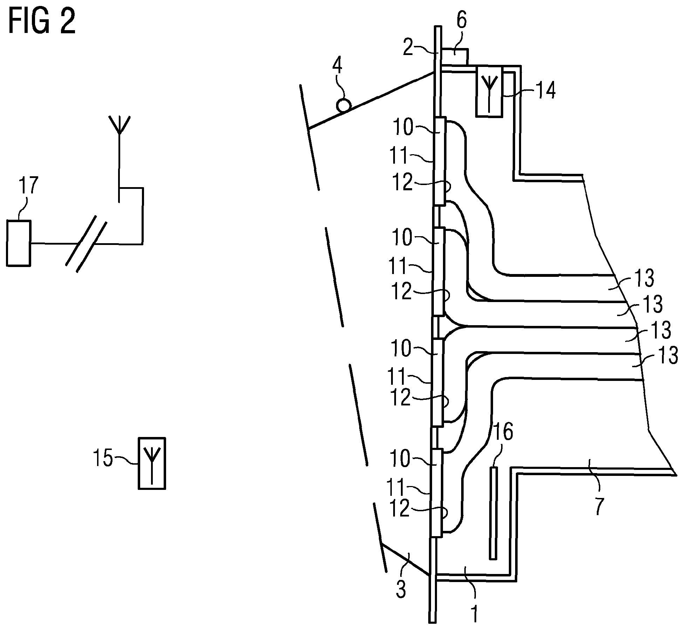

Figure 2 schematically displays, besides other devices, a part of the main body of the room air conditioner. On the left, indoor heat exchanger 3 has been cut off midway. On the right, arm 7 has been cut off too.

Within housing 1, thermoelectric heat pumps 10 are Peltier elements "CP30338" from the company CUI Devices, arranged in a four-by-four matrix. Their output plates 11 are flush with cover plate 2. Their input plates 12 are connected to heat pipes 13.

A wireless communication module 14 can receive room air temperature data from a separate air temperature sensor 15, which is mounted in the room away from the main body of the room air conditioner and away from the indoor air circulation through the indoor heat exchanger. Using this sensor 15 improves the determination whether a cooling or heating effort must be prolonged. The communication module 14 relays the sensed data to a subordinate controller part 16 in housing 1.

Setting the performance of the thermoelectric heat pumps 10, the subordinate controller part 16 performs closed loop regulation on the basis of room temperature data from the separate air temperature sensor 15 and from the sensor suite 6, on the basis of humidity data from the sensor suite 6 and on the basis of outside temperature data from the air temperature sensor 9. This combination of measurands is used for determining a cooling or heating demand. However, the subordinate controller part 16 amends its output if needed to restrict the temperature difference between the output plates 11 and the input plates 12 to 30°C. Also, it amends its output if needed to restrict condensation on the output plates 11 of the thermoelectric heat pumps 10 or on the indoor heat exchanger 3, which is depicted only in part here. In both cases, it makes the thermoelectric heat pumps 10 cool their output plates 11 less than or not at all even though the sensor output and the setpoint would require doing so. Once in every week, the subordinate controller part 16 amends its output for heating the output plate at 80°C for 20s.

The setpoint for the closed loop regulation is determined by a superior controller part 17, taking occupant identity into account, if available. The superior controller part 17 is a cloud server on which a dedicated software runs, and which communicates with the subordinate controller part 16 through communication module 14. The superior controller part 17 adjusts the algorithm by which the subordinate controller part 16 calculates the cooling performance of the thermoelectric heat pumps 10 at which in the circumstances condensation would occur. It also analyses the power consumption over time and offers an occupant various control models via an app on his smartphone. It likewise warns an occupant of the weekly heating pulse and suggests airing the room briefly. If the superior controller part 17 determines a need or receives a request for user feedback, it enquires feedback by means of questionnaires that are presented by the app.

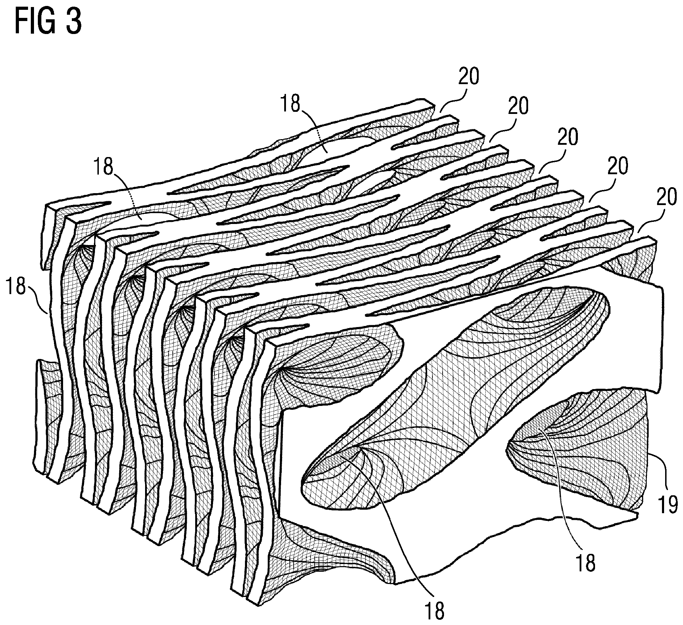

Figure 3 presents structural detail of the content of indoor heat exchanger 3 of the same or a different room air conditioner, which is uniform everywhere. Thus, the simply connected region with few straight passages in line with the main air flow covers the entire topside of the indoor heat exchanger 3. Its corresponding part, namely the part behind the region, is the entire volume of the heat exchanger 3.

The structure closely resembles a gyroid, the surface of which is curved everywhere. It can be produced by established techniques of added manufacturing. The wall thickness is 140 micrometres. Holes of around 1mm are recognisably lined up to make four straight passages 18 for the air through the indoor heat exchanger 3. Their direction is in line with the main flow of air from the room towards them, from above in figure 1 when the room air conditioner cools the air and from below when it heats the air. Such straight passages contribute 19% to the frontal area of the indoor heat exchanger 3. Flow paths with a straight passage in different directions are interconnected but require approaching air to turn a corner first. Some of these flow paths are blocked at the far end by cover plate 2 or by the flush mounted output plates 11 therein. There, perpendicular straight passages only contribute 3% of the frontal area.

Along the air flow paths of the four straight passages 18, the path wall 19 protrudes and recedes transversally 5 times each within the depicted rectangular volume. Every time, the local reduction of the air flow path cross sectional area is an estimated 80% of the previous air flow path cross sectional area, which covers the large, twisted funnel that leads up to the hole of straight passage 18. Downstream, the estimation of the local increase is around 500%, for the same reason. The largest transversal protrusion is around 0.7mm, all the way from where the funnel meets up with the funnel of the next parallel straight passage 18 or with the funnel of some side channel 20 that branches off under a different angle. Such interconnected side channels protrude and recede transversally less frequently within the length of the depicted rectangular volume.

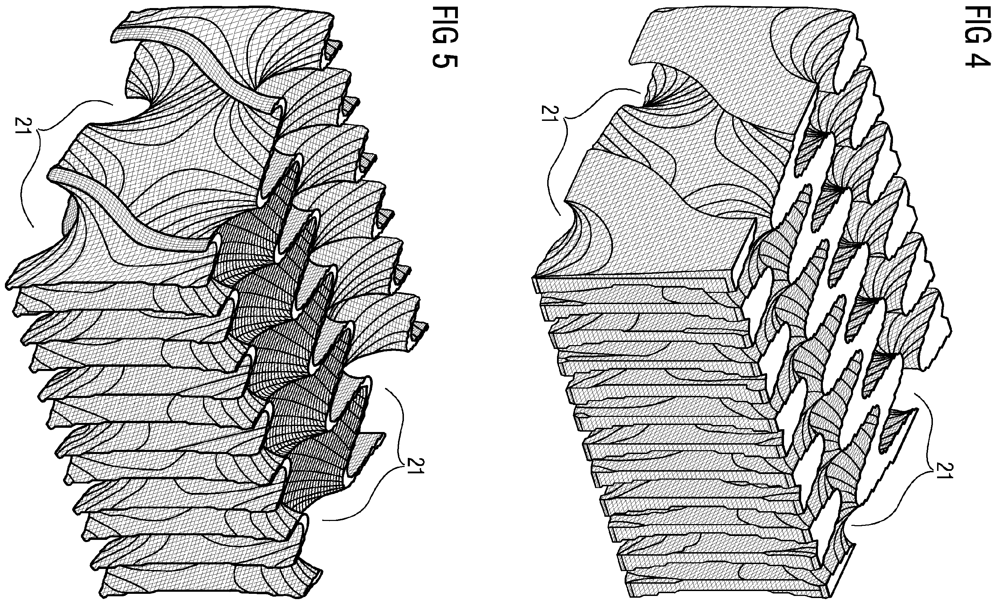

Figure 4 presents structural detail of the content of a variant indoor heat exchanger, from a different perspective. In this variant, the structure of the indoor heat exchanger is not uniform. It can only be produced economically by added manufacturing.

The structure resembles the same gyroid of the same material. However, close to where the indoor heat exchanger is thermally connected to the output plate of the thermoelectric heat pump, the wall thickness is greater, at 180 micrometres. As a result, the local heat conduction within the inside hear exchanger material is improved. Depending on parameters elsewhere, this may allow a straighter shape of the indoor heat exchanger overall, yet keep the size of the inner temperature gradient small in dynamic equilibrium.

On top of the depicted rectangular volume, one can spot the onset of holes for two straight passages 21 through the indoor heat exchanger in line with the main flow of air from the room towards them. At the bottom left, the onset of holes of the other two straight passages 21 can be seen. The walls conduct heat from there and from further parts of the indoor heat exchanger towards the thermal connection to the output plate of the thermoelectric heat pump, roughly perpendicular to the four straight passages 21, or conduct heat vice versa.

Figure 5 shows structural detail of the content of the same variant indoor heat exchanger, but the depicted rectangular volume is now far from where the indoor heat exchanger is thermally connected to the output plate of the thermoelectric heat pump.

Here, the wall thickness is only 50 micrometres. Accordingly, the four straight passages 21 on the top and at the bottom of the depicted rectangular volume are much larger, now contributing no less than 36% to the frontal area of the indoor heat exchanger. Accordingly, a simply connected region can cover such parts of the indoor heat exchanger. For this structure and material however, 36% is near the upper limit, because in practice the heat conduction within the walls of the indoor heat exchanger can just about keep up to avoid overly steep temperature drops in thermodynamic equilibrium. Also, the heat exchange between air and path wall would start to be affected by the reduced disturbance of the air flow.

As can be seen by comparing figure 4 and figure 5, the ratio of the average cross-sectional area of the indoor heat exchanger to the average cross-sectional area in between its material has decreased with the increased distance from where the indoor heat exchanger is thermally connected to the output plate. This was done by giving the indoor heat exchanger in figure 5 thinner material parts. Due to the reduced wall thickness, the local heat conduction capability has deteriorated. For achieving a similar effectivity, the depth of the variant indoor heat exchanger in the direction of the four straight passages 21 must be greater than of the original in figure 3. At the same time, the depth close to where the indoor heat exchanger is thermally connected to the output plate of the thermoelectric heat pump can be much smaller. Thanks to optimisation of its wall thickness, the shape of the variant indoor heat exchanger can be straight, like a brick or like half a disk, yet it can remain very large for the given quality of the thermoelectric heat pump and the given area of its output plate.

## Claims

1. Room air conditioner, comprising
at least one thermoelectric heat pump (10) that comprises an output plate (11) and an input plate (12),
at least one indoor heat exchanger (3) with air flow paths (20) therethrough that is thermally connected to the output plate (11) and that is configured in operation as intended to exchange heat with indoor air,
at least one outdoor heat exchanger (8) that is thermally connected to the input plate (12) and that is configured in operation as intended to exchange heat with an outdoor environment,
**characterised in that**
the room air conditioner comprises at least one sensor (6, 9, 15) that is configured to sense a measurand for a cooling or a heating demand,
the room air conditioner comprises a controller (16, 17) that is configured to generate output based on the sensor output and based on at least one setpoint and that is configured to set the performance of the thermoelectric heat pump (10) in accordance with its output,
in a simply connected region on the indoor heat exchanger (3), straight passages (18, 21) through the indoor heat exchanger (3) in line with the main air flow towards them in operation as intended are absent or contribute less than 44% to the frontal area of the region,
the corresponding part of the indoor heat exchanger (3) extends to where it is thermally connected to the output plate (11),
the frontal area of the region is at least half the frontal area of the indoor heat exchanger (3), and
at least some air flow paths (20) through the indoor heat exchanger (3) do not include such a straight passage (18, 21).

2. Room air conditioner according to the preceding claim, wherein
such straight passages (18, 21) are absent or contribute less than 36% to the frontal area of the region.

3. Room air conditioner according to any of the preceding claims, wherein
along most air flow paths through the indoor heat exchanger (3) the path wall (19) by protruding or receding transversally changes the air flow path cross sectional area locally by more than 2% of the previous air flow path cross sectional area at least 20 times.

4. Room air conditioner according to any of the preceding claims, wherein
the surface of the indoor heat exchanger (3) is uneven over at least 40% of its area.

5. Room air conditioner according to any of the preceding claims, wherein
in operation as intended the cross-sectional area of the indoor heat exchanger (3) in line with the main air flow towards its leading edges that are at a shared distance to where it is thermally connected to the output plate (11), gradually decreases with greater distance.

6. Room air conditioner according to any of the preceding claims, wherein
the shape of the indoor heat exchanger (3) tapers away from where it is thermally connected to the output plate (11) of the thermoelectric heat pump (10).

7. Room air conditioner according to any of the preceding claims, wherein
the indoor heat exchanger (3) comprises a heat isolating surface cover at least adjacent to where it is thermally connected to the output plate (11) of the thermoelectric heat pump (10).

8. Room air conditioner according to any of the preceding claims, wherein
the room air conditioner comprises at least one indoor heat exchanger holder (4, 5) that is configured reversibly to hold the indoor heat exchanger (3).

9. Room air conditioner according to any of the preceding claims, wherein
the sensor (6, 9, 15) or the controller (16, 17) includes a module (14) in the main body of the room air conditioner (1) that is configured to receive data from a remote part of it and to act in accordance therewith.

10. Room air conditioner according to any of the preceding claims, wherein
the controller (16, 17) is configured at times to amend its output for restricting the temperature difference between the output plate (11) and the input plate (12) of the thermoelectric heat pump (10).

11. Room air conditioner according to the preceding claim, wherein
the amendment is meant to restrict the difference to a maximum that is below 35°C.

12. Room air conditioner according to any of the preceding claims, wherein
the controller (16, 17) is configured at times to amend its output for restricting condensation at the output plate (11) of the thermoelectric heat pump (10) or on the indoor heat exchanger (3).

13. Room air conditioner according to the preceding claim, wherein
the controller (16, 17) is configured to calculate the performance of the thermoelectric heat pump (10) at which condensation would occur.

14. Room air conditioner according to any of the preceding claims as of claim 12, wherein
the controller (16, 17) is configured at times not to make the thermoelectric heat pump (10) cool the output plate (11) even though the sensor output and the setpoint would require doing so.

15. Room air conditioner according to any of the preceding claims, wherein
the controller (16, 17) is configured at times to amend its output for heating the output plate (11) temporarily above a minimum that is above 60°C.

## Patentansprüche

1. Raumklimaanlage, die Folgendes umfasst:
mindestens eine thermoelektrische Wärmepumpe (10), die eine Output-Platte (11) und eine Input-Platte (12) umfasst,
mindestens einen Innenraum-Wärmetauscher (3) mit durch ihn hindurchführenden Luftströmungswegen (20), der thermisch mit der Output-Platte (11) verbunden und so ausgelegt ist, dass er im bestimmungsgemäßen Betrieb mit Innenraumluft Wärme austauscht,
mindestens einen Außenraum-Wärmetauscher (8), der thermisch mit der Input-Platte (12) verbunden und so ausgelegt ist, dass er im bestimmungsgemäßen Betrieb mit einer Außenumgebung Wärme austauscht,
**dadurch gekennzeichnet, dass**
die Raumklimaanlage mindestens einen Sensor (6, 9, 15) umfasst, der so ausgelegt ist, dass er einen Messgrösse für einen Kühl- oder einen Heizbedarf erfasst,
die Raumklimaanlage ein Regler(16, 17) umfasst, der so ausgelegt ist, dass er auf der Grundlage der Sensorausgabe und mindestens eines Sollwerts eine Ausgabe generiert und dass er die Leistung der thermoelektrischen Wärmepumpe (10) ihrer Ausgabe entsprechend einstellt,
in einer einfach verbundenen Region an dem Innenraum-Wärmetauscher (3) gerade durch den Innenraum-Wärmetauscher (3) führende Durchgänge (18, 21), die auf den im bestimmungsgemäßen Betrieb zu ihnen hinfließenden Hauptluftstrom ausgerichtet sind,
fehlen oder weniger als 44% der vorderen Fläche der Region ausmachen,
sich der entsprechende Teil des Innenraum-Wärmetauschers (3) bis zu der Stelle erstreckt, wo er thermisch mit der Output-Platte (11) verbunden ist,
die vordere Fläche der Region zumindest der Hälfte der vorderen Fläche des Innenraum-Wärmetauschers (3) entspricht und
zumindest einige durch den Innenraum-Wärmetauscher (3) führende Luftströmungswege (20) keinen solchen geraden Durchgang (18, 21) aufweisen.

2. Raumklimaanlage nach dem vorhergehenden Anspruch, wobei solche geraden Durchgänge (18, 21) fehlen oder weniger als 36% der vorderen Fläche der Region ausmachen.

3. Raumklimaanlage nach einem der vorhergehenden Ansprüche, wobei
entlang der meisten durch den Innenraum-Wärmetauscher (3) führenden Luftströmungswege die Wegwand (19) die Querschnittsfläche des Luftströmungswegs dadurch, dass sie schräg vorsteht oder zurückspringt, lokal mindestens 20-mal um mehr als 2% der vorhergehenden Querschnittsfläche des Luftströmungswegs ändert.

4. Raumklimaanlage nach einem der vorhergehenden Ansprüche, wobei
die Oberfläche des Innenraum-Wärmetauschers (3) über mindestens 40% ihrer Fläche uneben ist.

5. Raumklimaanlage nach einem der vorhergehenden Ansprüche, wobei
sich im bestimmungsgemäßen Betrieb die Querschnittsfläche des Innenraum-Wärmetauschers (3) entlang den Hauptluftstrom der zu seinen Vorderkanten hin fließt, welche Vorderkanten im gleichen Abstand zu der Stelle liegen, an der er thermisch mit der Output-Platte (11) verbunden ist, mit zunehmendem Abstand allmählich verringert.

6. Raumklimaanlage nach einem der vorhergehenden Ansprüche, wobei
sich die Form des Innenraum-Wärmetauschers (3) ausgehend von der Stelle, an der er thermisch mit der Output-Platte (11) der thermoelektrischen Wärmepumpe (10) verbunden ist, verjüngt.

7. Raumklimaanlage nach einem der vorhergehenden Ansprüche, wobei
der Innenraum-Wärmetauscher (3) zumindest angrenzend an die Stelle, an der er thermisch mit der Output-Platte (11) der thermoelektrischen Wärmepumpe (10) verbunden ist, eine wärmedämmende Oberflächenabdeckung umfasst.

8. Raumklimaanlage nach einem der vorhergehenden Ansprüche, wobei
die Raumklimaanlage mindestens eine Innenraum-Wärmetauscherhalterung (4, 5) umfasst, die so ausgelegt ist, dass sie den Innenraum-Wärmetauscher (3) reversibel hält.

9. Raumklimaanlage nach einem der vorhergehenden Ansprüche, wobei
der Sensor (6, 9, 15) oder der Regler (16, 17) ein Modul (14) im Hauptteil der Raumklimaanlage (1) aufweist, das so ausgelegt ist, dass es Daten von einem entfernt gelegenen Teil davon empfängt und diesem entsprechend arbeitet.

10. Raumklimaanlage nach einem der vorhergehenden Ansprüche, wobei
der Regler (16, 17) so ausgelegt ist, dass er zeitweilig seine Ausgabe so ändert, dass die Temperaturdifferenz zwischen der Output-Platte (11) und der Input-Platte (12) der thermoelektrischen Wärmepumpe (10) begrenzt wird.

11. Raumklimaanlage nach dem vorhergehenden Anspruch, wobei die Änderung dazu dient, die Differenz auf ein Maximum zu begrenzen, das unter 35°C liegt.

12. Raumklimaanlage nach einem der vorhergehenden Ansprüche, wobei
der Regler (16, 17) so ausgelegt ist, dass er zeitweilig seine Ausgabe so ändert, dass Kondensation an der Output-Platte (11) der thermoelektrischen Wärmepumpe (10) oder am Innenraum-Wärmetauscher (3) eingeschränkt wird.

13. Raumklimaanlage nach dem vorhergehenden Anspruch, wobei der Regler (16, 17) so ausgelegt ist, dass er die Leistung der thermoelektrischen Wärmepumpe (10) berechnet, bei der es zu Kondensation kommen würde.

14. Raumklimaanlage nach einem der vorhergehenden Ansprüche ab Anspruch 12, wobei
der Regler (16, 17) so ausgelegt ist, dass er zeitweilig bewirkt, dass die thermoelektrische Wärmepumpe (10) die Output-Platte (11) nicht kühlt, auch wenn die Sensorausgabe und der Sollwert dies erfordern würden.

15. Raumklimaanlage nach einem der vorhergehenden Ansprüche, wobei
der Regler (16, 17) so ausgelegt ist, dass er zeitweilig seine Ausgabe so ändert, dass die Output-Platte (11) vorübergehend auf mehr als ein Minimum aufgeheizt wird, das über 60°C liegt.

## Revendications

1. Climatiseur d'air ambiant, comprenant :
au moins une pompe à chaleur thermoélectrique (10) qui comprend une plaque de sortie (11) et une plaque d'entrée (12) ;
au moins un échangeur de chaleur intérieur (3) qui est muni de voies d'écoulement d'air (20) qui le traversent, qui est connecté thermiquement à la plaque de sortie (11) et qui est configuré, en fonctionnement tel que prévu, pour échanger de la chaleur avec l'air intérieur ; et
au moins un échangeur de chaleur extérieur (8) qui est connecté thermiquement à la plaque d'entrée (12) et qui est configuré, en fonctionnement tel que prévu, pour échanger de la chaleur avec un environnement extérieur,
**caractérisé en ce que** :
le climatiseur d'air ambiant comprend au moins un capteur (6, 9, 15) qui est configuré pour détecter une grandeur à mesurer relative à une demande de refroidissement ou à une demande de chauffage ;
le climatiseur d'air ambiant comprend un contrôleur (16, 17) qui est configuré pour générer une sortie sur la base de la sortie du capteur et sur la base d'au moins un point de consigne et qui est configuré pour définir la performance de la pompe à chaleur thermoélectrique (10) conformément à sa sortie ;
dans une région à connexion simple sur l'échangeur de chaleur intérieur (3), des passages rectilignes (18, 21) au travers de l'échangeur de chaleur intérieur (3) en ligne avec l'écoulement d'air principal dans leur direction, en fonctionnement tel que prévu, sont absents ou contribuent selon moins de 44 % à l'aire frontale de la région ;
la partie correspondante de l'échangeur de chaleur intérieur (3) est étendue jusqu'à un endroit où elle est connectée thermiquement à la plaque de sortie (11) ;
l'aire frontale de la région est au moins égale à la moitié de l'aire frontale de l'échangeur de chaleur intérieur (3) ; et
au moins certaines voies d'écoulement d'air (20) au travers de l'échangeur de chaleur intérieur (3) n'incluent pas un tel passage rectiligne (18, 21).

2. Climatiseur d'air ambiant selon la revendication précédente, dans lequel :
ces passages rectilignes (18, 21) sont absents ou contribuent selon moins de 36 % à l'aire frontale de la région.

3. Climatiseur d'air ambiant selon l'une quelconque des revendications précédentes, dans lequel :
le long de la majeure partie des voies d'écoulement d'air au travers de l'échangeur de chaleur intérieur (3), la paroi de voie (19), qu'elle fasse saillie transversalement ou qu'elle soit en retrait transversalement, modifie l'aire en coupe transversale de voie d'écoulement d'air localement de plus de 2 % de l'aire en coupe transversale de voie d'écoulement d'air antérieure au moins 20 fois.

4. Climatiseur d'air ambiant selon l'une quelconque des revendications précédentes, dans lequel :
la surface de l'échangeur de chaleur intérieur (3) présente des irrégularités sur au moins 40 % de son aire.

5. Climatiseur d'air ambiant selon l'une quelconque des revendications précédentes, dans lequel :
en fonctionnement tel que prévu, l'aire en coupe transversale de l'échangeur de chaleur intérieur (3) en ligne avec l'écoulement d'air principal en direction de ses bords d'attaque qui sont à une distance partagée par rapport à un endroit où il est connecté thermiquement à la plaque de sortie (11), diminue de façon progressive au fil de l'augmentation de la distance.

6. Climatiseur d'air ambiant selon l'une quelconque des revendications précédentes, dans lequel :
la forme de l'échangeur de chaleur intérieur (3) est évasée au fil de l'éloignement par rapport à un endroit où il est connecté thermiquement à la plaque de sortie (11) de la pompe à chaleur thermoélectrique (10).

7. Climatiseur d'air ambiant selon l'une quelconque des revendications précédentes, dans lequel :
l'échangeur de chaleur intérieur (3) comprend un moyen de recouvrement de surface à fonction d'isolation thermique qui est au moins adjacent à un endroit où il est connecté thermiquement à la plaque de sortie (11) de la pompe à chaleur thermoélectrique (10).

8. Climatiseur d'air ambiant selon l'une quelconque des revendications précédentes, dans lequel :
le climatiseur d'air ambiant comprend au moins un moyen de support et de maintien d'échangeur de chaleur intérieur (4, 5) qui est configuré pour supporter et maintenir de manière réversible l'échangeur de chaleur intérieur (3).

9. Climatiseur d'air ambiant selon l'une quelconque des revendications précédentes, dans lequel :
le capteur (6, 9, 15) ou le contrôleur (16, 17) inclut un module (14) dans le corps principal du climatiseur d'air ambiant (1) qui est configuré pour recevoir des données en provenance d'une partie qui en est éloignée et pour opérer en conformité avec ces mêmes données.

10. Climatiseur d'air ambiant selon l'une quelconque des revendications précédentes, dans lequel :
le contrôleur (16, 17) est configuré pour, à certains instants, réaliser des modifications au niveau de sa sortie dans le but de limiter la différence de température entre la plaque de sortie (11) et la plaque d'entrée (12) de la pompe à chaleur thermoélectrique (10).

11. Climatiseur d'air ambiant selon la revendication précédente, dans lequel :
la réalisation de modifications a pour objet de limiter la différence de température à un maximum qui est endeçà de 35 °C.

12. Climatiseur d'air ambiant selon l'une quelconque des revendications précédentes, dans lequel :
le contrôleur (16, 17) est configuré pour, à certains instants, réaliser des modifications au niveau de sa sortie dans le but de limiter la condensation au niveau de la plaque de sortie (11) de la pompe à chaleur thermoélectrique (10) ou sur l'échangeur de chaleur intérieur (3).

13. Climatiseur d'air ambiant selon la revendication précédente, dans lequel :
le contrôleur (16, 17) est configuré pour calculer la performance de la pompe à chaleur thermoélectrique (10) à laquelle de la condensation est susceptible de se produire.

14. Climatiseur d'air ambiant selon l'une quelconque des revendications précédentes lorsqu'elle dépend de la revendication 12, dans lequel :
le contrôleur (16, 17) est configuré pour, à certains instants, faire en sorte que la pompe à chaleur thermoélectrique (10) ne refroidisse pas la plaque de sortie (11) même si la sortie du capteur et le point de consigne exigeraient de le faire.

15. Climatiseur d'air ambiant selon l'une quelconque des revendications précédentes, dans lequel :
le contrôleur (16, 17) est configuré pour, à certains instants, réaliser des modifications au niveau de sa sortie dans le but de chauffer la plaque de sortie (11) temporairement au-delà d'un minimum qui est au-delà de 60 °C.
